# EUROPÄISCHE PATENTSCHRIFT

(11) **EP 4 377 588 B1**
(45) Veröffentlichungstag und Bekanntmachung des Hinweises auf die Patenterteilung: **03.09.2025**
(21) Anmeldenummer: 22740383.9
(22) Anmeldetag: 05.07.2022
(51) Int. Cl.: F16H 25/22

(54) **LINEARANTRIEB MIT ZWEI UNTERSETZUNGSSTUFEN**
LINEAR DRIVE HAVING TWO REDUCTION STAGES
ENTRAÎNEMENT LINÉAIRE À DEUX ÉTAGES DE RÉDUCTION

(30) Priorität: 28.07.2021 DE 102021119597
(43) Veröffentlichungstag der Anmeldung: 05.06.2024
(73) Patentinhaber: Karlsruher Institut für Technologie, 76131 Karlsruhe (DE)
(72) Erfinder: KLAS, Cornelius, 76131 Karlsruhe (DE)
(86) Internationale Anmeldenummer: PCT/EP2022/068511
(87) Internationale Veröffentlichungsnummer: WO 2023/006350

(56) Entgegenhaltungen:
- EP-B1- 0 529 521
- CH-A5- 647 306
- US-A- 2 961 887

## Beschreibung

Die Erfindung betrifft einen Linearantrieb, vorzugsweise einen motorischen, weiter bevorzugt elektromotorischen Linearantrieb mit zwei Untersetzungsstufen.

Die eingangs genannten Linearantriebe dienen insbesondere der Umwandlung einer meist drehenden Bewegung eines Motors, meist Elektromotoren, in eine lineare Bewegung eines Stellgliedes. Sie umfassen ein Getriebe zwischen Motor und Stellglied, das gewöhnlich - sofern es sich nicht um ein Schaltgetriebe handelt - nur ein Untersetzungsverhältnis aufweist. Die Bewegungsgeschwindigkeit des Stellgliedes ist über die Motordrehzahl einstellbar, wobei die maximale Stellkraft bei einer unveränderten Getriebeübersetzung oder -untersetzung proportional zum jeweils anliegenden Drehmoments des Motors ist.

Bei Manipulatoren, insbesondere die eine humanoide oder tierähnliche Bewegung nachbilden sollen, stellt sich jedoch immer wieder die Aufgabe einer Anhebung der Bewegungsgeschwindigkeit zu Lasten der Stellkraft und umgekehrt, d.h. einer Änderung der Getriebeübersetzung oder -untersetzung. Dies würde eine gute Dosierbarkeit der Kraft- und Bewegungsabläufe insbesondere bei manuell gesteuerten Manipulatoren ermöglichen. Menschliche Muskeln ermöglichen nämlich je nach zu bewältigender Aufgabe hohe Stellkräfte bei geringen Bewegungsgeschwindigkeiten und niedrige Stellkräfte bei hohen Bewegungsgeschwindigkeiten. Auch wäre die erforderliche maximale Leistung und damit die Baugröße eines Motors mit anpassbarer Getriebeuntersetzung deutlich niedriger als bei einem elektromotorischen Linearantrieb mit konstanter Untersetzung.

Manuell oder automatisch schaltbare Getriebe bieten zwar den Vorteil einer Änderbarkeit einer Getriebeuntersetzung, sind aber meist groß, schwer, teuer und komplex. Insbesondere bei der Konzeption humanoider oder tierähnlicher Roboter mit einer Vielzahl von Aktoren und einem begrenzten Bauraum stellt dies einen limitierenden Faktor dar.

In DE 94 13 740 U1 und EP 1 877 677 B1 wird das Funktionsprinzip eines Harmonic Drive auf lineare Getriebe übertragen, um sehr hohe Übersetzungen zu erreichen. Das radiale gleiten inneren Zähne in die äußeren ähnelt dabei der Mutter, die radial in die Spindel gleitet. Damit lassen sich zwar platzsparend hohe Übersetzungsverhältnisse, jedoch keine Änderung der Übersetzung realisieren.

In EP 0 529 521 B1 wird dagegen eine zweistufiges Rotations-Translationsgetriebe beschrieben, um spielfrei und Reibungsarm sehr hohe Untersetzungen zu erreichen.

Ferner offenbaren DD 211 768 A5 und EP 0 776 285 B1 weitere Lösungen für eine mehrstufige Untersetzung mit mehreren, ineinander geschachtelten Spindeln.

DD 211 768 A5 beschreibt eine Linearantrieb mit zwei Motoren, bei welcher der eine Motor eine Mutter, der andere Motor eine Gewindespindel antreibt. Dabei sind die Motoren am äußeren Ende von zwei teleskopisch ineinander verschiebbaren, gegen Verdrehung um ihre Achse gesicherten rohrförmigen Gehäuseteilen angebracht und die Mutter und die Gewindespindel im Innern dieser Gehäuseteile angeordnet. Die Untersetzung ist über den jeweiligen Betrieb der Motoren schaltbar.

EP 0 776 285 B1 beschreibt einen mehrstufigen Spindeltrieb zur Umsetzung einer Drehbewegung in eine Linearbewegung mit unterschiedlichen Ein- und Ausfahrgeschwindigkeiten, bestehend aus mindestens zwei teleskopisch ineinandergreifenden und in Schraubverbindung stehenden Gewindespindeln mit unterschiedlicher Steigung, von denen eine Gewindespindel mit einem Antriebselement verbunden ist und eine andere Gewindespindel über eine Mutter mit einem Abtriebselement zusammenwirkt, wobei die Gewindespindeln und die Ein- und Ausfahrgeschwindigkeiten durch Reibkraft umschaltbar sind. Die Untersetzung ist über unterschiedliche Reibungsverhältnisse schaltbar.

Ferner wird in DE 01 057 411 B ein Reibungsgetriebe zur Umwandlung einer Drehbewegung in eine Vorschubbewegung mit in reibkraftschlüssigem Eingriff und in einem veränderbaren Winkel zueinanderstehenden zylindrischen Körpern, im Beispiel ein Ringkörper um eine Welle, offenbart. Die Getriebeuntersetzung ist stufenlos über den Winkel zwischen Ringkörper und Welle einstellbar.

In DE 10 2013 015 257 B3 wird ein Rotations-Translations-Getriebe mit zuschaltbarer Untersetzung beschrieben. Es arbeitet nach dem Prinzip der Differentialspindel was hohe Untersetzungen erlaubt. Durch einen Wechsel zwischen normalem Spindelbetrieb und Differentialspindelbetrieb ist die Untersetzung veränderbar. Bei Erreichen einer bestimmten Kraft schaltet sich eine zusätzliche Getriebestufe selbsttätig oder manuell zu. Die Kraft wirkt auf ein spannbares System, dessen Kraft-Weg-Kennlinie einen deutlichen Kraftanstieg über den Weg zeigt.

CH 647306 A5 offenbart einen Linearantrieb mit zwei Motoren, von denen einer die Mutter und der andere die Spindel antreiben. Durch die Wahl der Motorgeschwindigkeiten kann die Vorschubgeschwindigkeit in einem weiten Bereich verändert werden.

In der DE 10 2007 059 457 A1 wird ferner eine lastsensitive Kraftübertragungseinrichtung mit einer drehenden Gewindespindel und einer exzentrisch um dieser angeordneten drehbaren Mutter beschrieben. Die axiale Verschiebung erfolgt allein durch die Mutter auf der axial fixierten, aber drehenden Gewindespindel. Die Getriebeuntersetzung stellt sich durch die Drehzahl der Mutter ein, wobei jene über eine viskose oder reibende Einbettung in einer Schlittenaufnahme in ihrer Drehbewegung gedämpft ist und sich so eine lastabhängige Drehzahl der Mutter und damit ein individuelles Untersetzungsverhältnis einstellt.

Als Alternative für elektromotorische Antriebe bieten sich hydraulische Antriebe an, über die ein Stellglied zwar platzsparend antreibbar sind, aber eine hydaulische Versorgung nebst Steuerungsventile und hydraulische Verbindungmittel zum Stellglied erfordern.

Anwendungsbeispiele für Linearantriebe der eingangs genannten Art finden sich vorzugsweise in der Robotik wie z.B. in der genannten humanoiden Robotik, aber auch bei alltäglichen Anwendungen wie z.B. bei elektrischen Antrieben für Fenster, Tore oder Rollläden, bei denen einerseits geringe Kräfte mit hohen Stellgeschwindigkeiten realisiert werden müssen, je nach Situation temporär aber auch hohe Kräfte wie z.B. beim Anfahren, überwunden werden müssen.

Davon ausgehend liegt eine **Aufgabe der Erfindung** darin, ein elektromotorischen Linearantrieb mit zwei Untersetzungsstufen (oder Übersetzungsstufen) vorzuschlagen, das die vorgenannten Einschränkungen nicht aufweist, sich durch eine geringe Baugröße auszeichnet und sich durch eine lastabhängige Umschaltung der Untersetzung auszeichnet.

Gelöst wird die Aufgabe durch einen Linearantrieb mit den Merkmalen des Anspruch 1. Hierauf zurückbezogene Unteransprüche geben vorteilhafte Ausgestaltungen wieder.

Zur Lösung der Aufgabe wird ein Linearantrieb, vorzugsweise ein motorischer Linearantrieb, weiter bevorzugt ein elektromotorischer Linearantrieb mit zwei Untersetzungsstufen vorgeschlagen, umfassend zumindest die nachfolgend genannten Komponenten:
a) eine Antriebsspindel mit einem Außengewinde;
b) ein Gehäuse, konzentrisch um die Antriebspindel angeordnet;
c) eine im Gehäuse um die Antriebsspindel konzentrisch rotatorisch gelagerte und durch eine erste Antriebsquelle, vorzugsweise einen ersten Motor antreibbare Hohlwelle;
d) ein in der Hohlwelle mit einem exzentrischen Versatz zur Antriebsspindel rotatorisch gelagertes und durch eine zweite Antriebsquelle, vorzugsweise einen zweiten Motor antreibbares Antriebselement mit Innengewinde;
e) Gleitlagerelemente zur axialen Führung der Antriebsspindel vorzugsweise im Gehäuse weiter bevorzugt als Gleitlagerschalen drehbar in der Hohlwelle gelagert.

Die Gewinde von Antriebsspindel (Außengewinde) und Antriebselement (Innengewinde) weisen dabei ein gleiches Gewindemodul auf; sie greifen vorzugsweise über mehrere Zahnflanken hinweg ineinander, sind somit in axialer Richtung formschlüssig miteinander gekoppelt und eignen sich so für die Übertragung einer axialen Kraft und einer axialen Verschiebung auf die Antriebsspindel. Das Konzept sieht vor, dass diese axiale Kraft und Verschiebung nur durch diese ineinandergreifenden Gewinde übertragen werden. Der Gewindeinnendurchmesser des Antriebselements ist jedoch größer als der Gewindeaußendurchmesser der Antriebsspindel, wobei der exzentrische Versatz so eingestellt ist, dass das Innengewinde des Antriebselements nur einseitig, d.h. nur einem begrenzten Winkelbereich (vorzugsweise kleiner 90°, weiter bevorzugt kleiner 45°, je nach Verhältnis des Außen- zu Innengewinde des Gewindequerschnitts in das Außengewinde der Antriebsspindel formschlüssig eingreift, d.h. nur in diesem Bereich eine axiale Kraft übertragbar ist.

Je nach Modul, Exzentrizität, Verhältnis des Außen- zu Innengewinde des Gewindequerschnitts und Zahnform sind grundsätzlich alle Winkelbereiche von wenigen Grad bis zu (fast) 360° realisierbar. Bereits die Fertigungstoleranzen eines Normgewindes (z.B. M8) sind grundsätzlich groß genug, um die genannten Winkelbereiche für den vorgeschlagenen Linearantrieb zu realisieren. Dabei verursachen kleinere Winkelbereiche grundsätzlich auch eine geringere Reibung zwischen den Zahnflanken, da das Innengewinde des Antriebselements mehr über das Außengewinde der Antriebsspindel rollt. Größere Überdeckungen weisen grundsätzlich den Vorteil einer größeren für eine Kraftübertagung zur Verfügung stehenden Zahnflankenfläche und damit einer größeren Traglast. Die Reibverluste verhalten sich bei einem Antrieb der Hohlwelle durch die erste Antriebsquelle näherungsweise proportional zu 2 x Zahnhöhe x Reibwert x Axialkraft pro Umdrehung. Beim direkten Antrieb des Antriebselements über die zweite Antriebsquelle mit einer Übertragung sind die Reibverluste proportional zum Umfang x Reibwert x Axialkraft pro Umdrehung deutlich höher, die übertragbaren Axialkräfte aber auch niedriger.

Mit der Drehbarkeit der Hohlwelle relativ zur Antriebsspindel ändert sich auch die Ausrichtung der Exzentrizität des Antriebselements in der Antriebsspindel im Gehäuse.

Es wird folglich ein Linearantrieb mit zwei Antriebsquellen, vorzugsweise zwei Motoren, weiter bevorzugt als Elektromotoren, mit zwei Untersetzungen vorgeschlagen. Mit den beiden Antriebquellen wird eine rotatorische Bewegung folglich in zwei Wirkmechanismen in eine lineare Bewegung axial zur Antriebsspindel umgesetzt, wobei diese grundsätzlich jeweils einzeln aber auch in Kombination einsetzbar sind. Die beiden Wirkmechanismen unterscheiden sich insbesondere im Untersetzungsverhältnis, wobei jeder der beiden Wirkmechanismus jeweils vorzugsweise nur durch einen der beiden Antriebsquellen gespeist wird.

Der Begriff Untersetzung oder Übersetzung gibt den Umwandlungsgrad einer Bewegung einer anderen physikalischen Größe, beispielweise eine Umdrehungszahl, in eine gleichartige Bewegung mit einem anderen Wert wieder. Bei einer Untersetzung oder Übersetzung eine Umdrehungszahl erfolgt eine Reduzierung bzw. Erhöhung der Umdrehungszahl der treibenden Welle zu der der getriebenen Welle, wobei durch die Unter- bzw. Übersetzung das Drehmoment im gleichen Unter- bzw. Übersetzungsverhältnis entsprechend ansteigt bzw. sich reduziert (abzüglich eventueller Übertragungsverluste).

Bei dem vorliegenden Linearantrieb wird eine Drehbewegung einer Antriebsquelle in eine lineare Vorschubbewegung, d.h. eine Längsbewegung der Antriebsspindel umgesetzt. Die Umwandlung erfolgt im vorliegenden Fall nicht im Rahmen gleichartiger physikalischer Größen, weswegen man hier, d.h. bei der Umwandlung von rotatorischen Bewegungen durch die erste bzw. zweite Antriebsquelle zu einer translatorischen Linearbewegung der Antriebsspindel von einer ersten bzw. zweiten Ganghöhe spricht. Eine Ganghöhe lässt sich aber im vorliegenden Fall rechnerisch in zwei Teilschritte aufteilen, und zwar in
- eine Umwandlung von einer physikalischen Größe (im vorliegenden Fall von einer rotatorischen in eine translatorische Bewegung mit gedanklich einer einzigen Ganghöhe für beide Antriebsquellen) und
- eine Untersetzung oder Übersetzung zwischen zwei gleichartigen physikalische Größen mit je einem Unter- oder Übersetzungsverhältnis für die beiden Antriebsquellen sowie deren getriebeseitigen Umsetzungsverhältnisse. Als Unter- bzw. Übersetzungsverhältnis der Quotient i aus Drehzahl zwischen Getriebeeingang und Getriebeausgang definiert. Bei i > 1 wird die Drehzahl verkleinert (Untersetzung), aber das übertragene Drehmoment vergrößert. Bei einer Übersetzung bei i < 1 wird die Drehzahl vergrößert, das übertragene Drehmoment verkleinert.

Die Begriffe Unter- und Übersetzung sowie Unter- und Übersetzungsverhältnis werden im Rahmen der Beschreibung der Erfindung im vorgenannten Sinne eingesetzt und repräsentieren die unterschiedlichen Umsetzungsverhältnisse, d.h. die beiden unterschiedlichen Ganghöhen bzw. Ganghöhenverhältnisse für die beiden Antriebsquellen.

Beim Antrieb der Hohlwelle über den ersten Motor ist ein einem Zykloidgetriebe ähnliches Getriebe vorgeschaltet, sodass die effektive Ganghöhe oder die Untersetzung im vorgenannten Sinne des Getriebes sich aus der Gewindesteigung multipliziert mit dem Übersetzungsverhältnis des Zykloidgetriebes bestimmt wird (erster Wirkmechanismus). Das Zykloidgetriebe ergibt sich aus einem Abrollen des nicht mit der Hohlwelle mitdrehenden Innengewindes des Antriebselements auf dem Außengewinde der (nicht drehbaren) Antriebsspindel. Ein Unter- oder Übersetzungsverhältnis errechnet sich aus den effektiven Gewindedurchmessern des Antriebelements D und der Antriebsspindel d: i=D/(D-d).

Die zweite Antriebsquelle treibt das Antriebselement mit Innengewinde in der Hohlwelle mit einem exzentrischen Versatz zur Antriebsspindel rotatorisch an (zweiter Wirkmechanismus); hierdurch verhält sich das Getriebe wie ein normaler Spindeltrieb, wobei die Untersetzung im angenommenen Falle einer im Gehäuse fixierter Hohlwelle nur von der Gewindesteigung des Innengewindes des Antriebselements bestimmt wird.

Beim vorgenannten zweiten Wirkmechanismus wird die Ganghöhe oder die Untersetzung im vorgenannten Sinne durch die Steigung des Innengewindes des Antriebselements bestimmt. Es erfolgt kein Abrollen des Innengewindes des Antriebselements auf dem Außengewinde der Antriebsspindel, sondern eine Abgleiten der Zahnflanken des Innengewindes des Antriebselements auf dem Außengewinde der Antriebsspindel.

Im Rahmen der Beschreibung schließt der Begriff "Untersetzung" in Zusammenhang mit der Umsetzung einer rotatorischen Bewegung durch eine Antriebsquelle zu einer translatorischen Bewegung der Antriebsspindel sowohl eine Untersetzung als auch eine Übersetzung folglich mit ein.

Der zweite Wirkmechanismus dient folglich der Umsetzung eines Schnellgangs, während der erste Wirkmechanismus der Umsetzung eines höher belastbaren langsamen Untersetzungsgangs.

Das Konzept sieht weiter vor, dass die zweite Antriebsquelle (d.h. die die geringere Übersetzung antreibt) einen Überlastschutz mit einer Leistungsbegrenzung oder einer Abschaltung aufweist. Stößt eine Stellbewegung im niedrig untersetzten Schnellgang auf einen mechanischen Widerstand, erfolgt eine Abschaltung dieses Antriebs, wobei die Stellbewegung höher untersetzt mittels der bevorzugt parallellaufenden ersten Antriebsquelle erfolgt.

Bei einem Antrieb mit Schrittmotoren können diese bevorzugt mit zwei Geschwindigkeiten, deren Verhältnis dem Übersetzungsverhältnis i entspricht angetrieben werden. Ein Überlastschutz des zweiten Motors ist hierbei nicht nötig, eine Geschwindigkeitsbegrenzung des ersten Motors aber in vielen Anwendungen wünschenswert, um Schrittverluste zu vermeiden.

Die vorgenannten Antriebsquellen umfassen vorzugsweise Motoren ohne oder mit Getriebe (Getriebemotoren) oder auch Schrittmotoren, jeweils eine drehende Antriebswelle umfassend. Vorzugsweise kommen entsprechende elektrisch getriebene Motoren zum Einsatz.

Eine optionale Ausführungsform sieht einen Linearantrieb vor, bei dem die erste und die zweite Antriebsquelle ein erstes bzw. ein zweites Antriebsmittel umfasst, wobei beide Antriebsmittel durch einen gemeinsamen motorischen Antrieb mit nur einem Motor und Übertragungsmitteln antreibbar sind. Als Überlastschutz der zweiten Antriebsquelle wird, gemäss der Erfindung, eine Kupplung (Schaltkupplung oder Rutschkupplung) vorgeschlagen, die bei einer Überlast vorzugsweise oberhalb eines Drehmomentschwellwertes zumindest die zweiten Antriebsmittel von dem Motor oder Übertragungsmitteln trennt und vorzugsweise in einen Freilaufmodus überführt. Alternativ umfasst der Überlastschutz eine aktiv schaltbare Kupplung, zumindest für die vorgenannte Trennung zumindest der zweiten Antriebsmittel von dem Motor oder Übertragungsmitteln. Eine Ansteuerung der aktiv schaltbare Kupplung, vorzugsweise elektromagnetisch oder elektromechanisch, erfolgt vorzugsweise mittels externer Ansteuerungssignale, wobei jene vorzugsweise außerhalb des Linearantriebs als Kraft- oder Wegsignale aufgenommen werden.

Gemäss der Erfindung ist die Antriebsspindel mittels einer Verdrehsicherung gegenüber dem Gehäuse auszugestalten, womit die Antriebsspindel nur axial im Gehäuse bewegbar gelagert ist. Diese Verdrehsicherung ist vorzugsweise durch entsprechende axial orientierten Führungspassungen auf der Antriebsspindel, vorzugsweise außerhalb des Gewindebereichs, alternativ über eine Drehmomentstütze an der Antriebsspindel gegenüber dem Gehäuse realisierbar. Eine Verdrehsicherung ist alternativ auch ohne separate Komponenten oder Führungspassung realisierbar, insbesondere dann, wenn der mit der Antriebsspindel verbundene Antriebsempfänger selbst nicht drehbar ist und eine Verbindung mit dem Gehäuse aufweist (mittelbare Verdrehsicherung).

Eine weitere Ausgestaltung des Linearantriebs sieht vor, dass das Antriebselement eine Mutter oder mehrere in Reihe fest miteinander gekoppelte Muttern mit exzentrischer Gewindebohrung umfasst. Insbesondere durch mehrere fest miteinander gekoppelte Muttern kann auf eine separate Führung der Antriebsspindel in Gleitlagern verzichtet werden; die Reibung in diesen Gleitlagern entfällt.

Eine weitere Ausgestaltung des Linearantriebs sieht vor, dass die Gleitlagerelemente zur axialen Führung der Antriebsspindel zwei in der Hohlwelle konzentrisch drehbar gelagerte Gleitlagerschalen umfassen. Die Gleitlagerelemente sind damit außerhalb der Antriebsquellen und möglichst nahe am Eingriff des Innengewindes des Antriebselements in das Außengewinde der Antriebsspindel angeordnet, was in vorteilhafter Weise die axiale Führungssteifigkeit erhöht und damit der Positoniergenauigkeit der Stellbewegung zugutekommt.

Die Zahnform des Außengewindes der Antriebsspindel und des Innengewindes des Antriebselements sind aufeinander abgestimmt. Die Anforderungen an die Zahnform sind in eine zweidimensionale Modellbetrachtung übertragbar. Die zweidimensionalen Kurven ergeben sich aus einem Schnitt durch die feststehende Spindel beim ersten Wirkmechanismus. Eine unbewegliche Kurve repräsentiert die Zahnform der Spindel, eine sich in axialer und radialer Richtung bewegende Kurve die Zahnform des Antriebselements inklusive der rollenden Bewegung um die Spindel. Die Gewinde sind so auszulegen, dass die beiden genannten Kurven sich zwar berühren, aber nicht durchdringen oder überschneiden dürfen. Eine Optimierung erfolgt in einer Maximierung der Berührungszeiten und Länge der berührenden Kurvenabschnitte, was eine niedrige Flächenpressung bedeutet (Unter Berücksichtigung der hertzschen Pressung wird auch aus einem Berührpunkt eine Fläche). Je länger die Zeitdauer der Berührung im zweidimensionalen Fall und je näher die beiden Kurven sich sind, desto größer ist also die Berührfläche im 3D und desto niedriger damit die Flächenpressung. Eine größere Berührfläche ergibt aber auch eine höhere Reibung, da die Bedingungen für eine Rollende Bewegung nur in einem Punkt erfüllt sein können. Je nach Anwendung kann zwischen wenig Reibung und hoher Tragkraft gewählt werden.

Für eine günstige Fertigung wird die Spindel vorzugsweise mit einem Standardgewinde, z.B. Trapezgewinde realisiert. Es gibt mit passenden Antriebselement/Muttern (z.B. dreidimensional gedruckt) einen großen Zeitanteil der Bewegung (zweidimensionalen Schnitt) in dem sich die Kurven berühren. Dies entspricht einem großen Winkelbereich im Schnitt mit einer Ebene deren normale axial auf der Spindel steht. Dabei gibt es während der Bewegung keine Überschneidungen.

Alternativ kann auch das Antriebselement/Muttern mit Standardgewinde ausgeführt sein und die Spindel mit darauf angepasstem Gewinde.

Die Erfindung wird anhand von Ausführungsbeispielen, den folgenden Figuren und Beschreibungen näher erläutert. Alle dargestellten Merkmale und deren Kombinationen sind nicht nur auf diese Ausführungsbeispiele und deren Ausgestaltungen begrenzt.

Vielmehr sollen diese stellvertretend für weitere mögliche, aber nicht explizit als Ausführungsbeispiele dargestellte weitere Ausgestaltungen kombinierbar angesehen werden. Es zeigen
**Fig.1a** **und b** zwei Schnittansichten einer ersten Ausführungsform mit zwei axialen Motoren, einem Antriebselement mit Innengewinde und zwei Gleitlagerelementen,
**Fig.2a** **und b** zwei Schnittansichten einer zweiten Ausführungsform mit zwei axialen Motoren und drei Antriebselementen mit Innengewinde,
**Fig.3a** **und b** zwei Schnittansichten einer dritten Ausführungsform mit nur einer Antriebsquelle sowie
**Fig.4a** **und b** zwei Schnittansichten einer vierten Ausführungsform, bei der beide Motoren abseits zur Antriebsspindel und dabei außerhalb des Gehäuses angeordnet und über Zahnradtriebe an die Hohlwelle bzw. das Antriebselement gekoppelt sind.

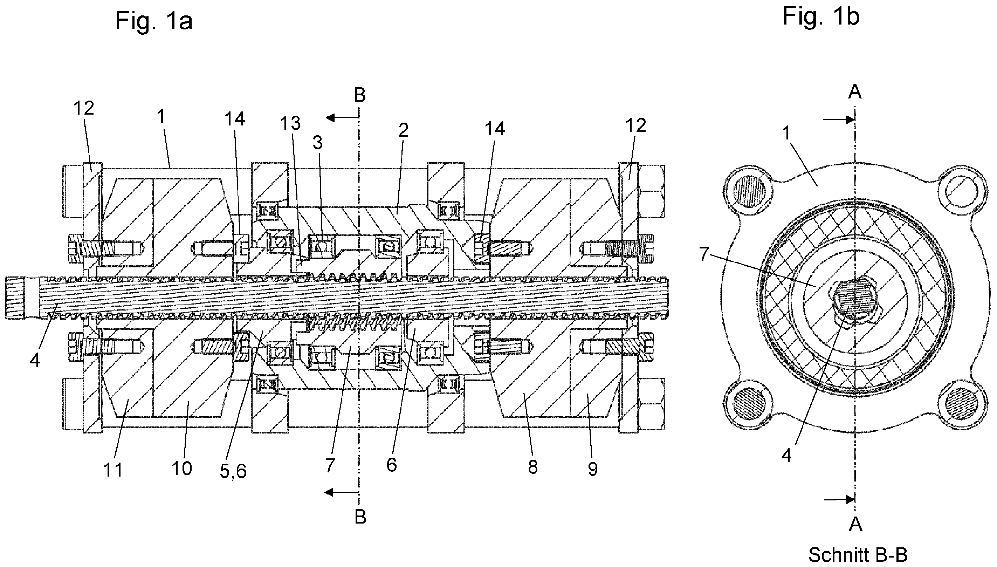

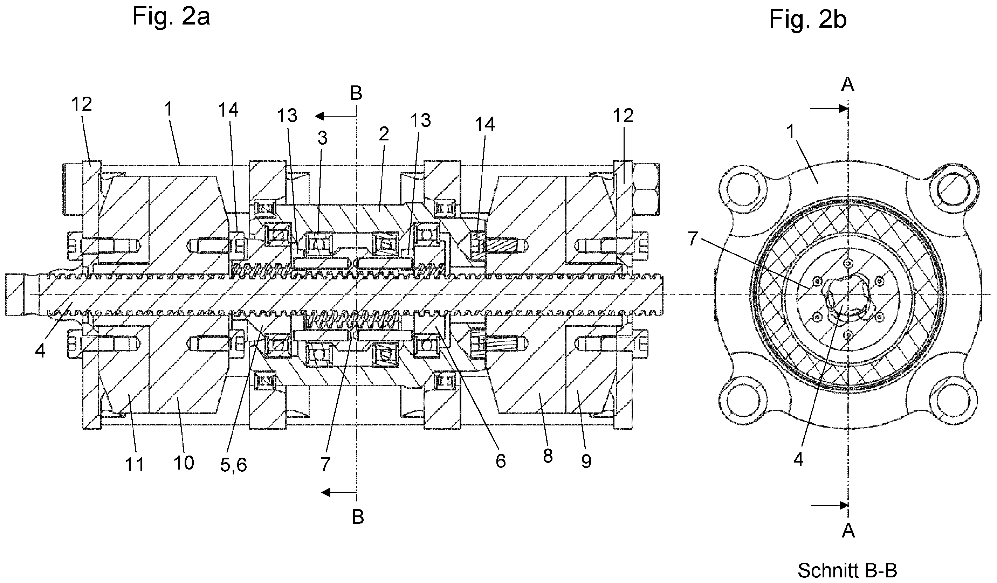

Die in **Fig.1** **und** **2** (jeweils a und b) dargestellten Ausführungsbeispiele von Linearantrieben mit zwei Untersetzungsstufen umfassen jeweils ein Gehäuse **1** mit einer in dieses koaxial eingesetzten und axial beweglichen Antriebsspindel **4** mit Aussengewinde, eine in Gehäuse um die Antriebsspindel kugelgelagert eingesetzte Hohlwelle **2** mit zwei exzentrisch in die Hohlwelle eingesetzte Lager **3** für ein Antriebselement **7.** Ferner sind ein erster und ein zweiter Motor als Antriebsquellen, jeweils mit Stator **9** bzw. **11** und Rotor **8** bzw. **10,** um die Antriebsspindel **4** angeordnet. Die Antriebspindel ist in allen drei Ausführungsformen in den Rotoren **8** und **10** mittels Gleitlagerung im Gehäuse axial verschiebbar gelagert. Die Statoren **9** und **11** sind im Beispiel jeweils mit Schrauben an jeweils eine Abschlussplatte **12** des Gehäuses angebunden.

Der erste Motor (in den Längsschnitten A-A in **Fig.1a** **und** **2a** jeweils rechts) treibt mit seinem Rotor **8** die Hohlwelle 2 an. Der zweite Motor (in den Längsschnitten A-A in **Fig.1a****,** **2a** **und** **3a** jeweils links) treibt mit seinem Rotor **10** eine konzentrisch auf der Antriebsspindel **4** gleitend gelagerte Kupplung **5** an, die dann wiederum die rotierende Bewegung über Mitnehmerelemente **13** jeweils das exzentrisch zur Antriebsspindel **4** in der Hohlwelle **2** mit Lager **3** gelagerte Antriebselement **7** weiterleitet.

Die Kraftübertragung erfolgt im Beispiel über die Schraubenköpfe von vorzugsweise mindestens zwei im Rotor axial eingeschraubte Schrauben, wobei die Schraubenköpfe **14** formschlüssig (optional auch mit zusätzlichen elastischen Zwischenelementen für eine spielfreie Passung) in entsprechende stirnseitige Vertiefungen der Hohlwelle **2** bzw. der Kupplung **5** formschlüssig eingreifen.

Formschlüssig nennt man eine Verbindung zwischen zwei Fügepartnern, wenn die Fügepartner durch ein Ineinandergreifen von Oberflächenstrukturen miteinander verbunden sind und vorzugsweise dabei gegeneinander fixiert sind. Im Rahmen dieser Anmeldung wird der Begriff auch für eine formschlüssige wirkende Kupplung genutzt, wobei die Fixierung auch über eine Spielpassung, wie im vorliegenden Fall, im Sinne einer Mitnehmerkupplung und auch das vorgenannte Mitnehmerelement mit eingeschlossen realisierbar ist.

Beidseitig nahe zum Antriebselement **7** auf die Antriebsspindel **4** wirkende Gleitlager in der Kupplung **5** (Kupplung ist hier als ein Gleitlagerelement **6)** sowie eines (weiteren) Gleitlagerelements **6** dienen der zusätzlichen Führung der Antriebsspindel in der Hohlwelle, womit sich in vorteilhafter Weise die genannten Kraftübertragungsmittel zwischen Antriebsquellen und Antriebsspindel steifer gestalten lassen.

Das Antriebselement **7** ist durch die Lager **3** exzentrisch außerhalb einer durch die Antriebsspindel vorgegebenen zentralen Achse gelagert. Dadurch rollt das Antriebselement mit seinem Innengewinde bei einer Umdrehung der Hohlwelle **2** auf der Antriebsspindel **4** ab und dreht sich dabei um den Bruchteil einer gesamten Umdrehung, der dem Unterschied der Durchmesser von Welle und Antriebsspindel im Verhältnis zum Antriebsspindeldurchmesser entspricht.

**Fig.1a** **und b** zeigt eine Ausführungsform mit zwei Motoren mit Hohlwelle um die Antriebsspindel angeordnet. Die Schraubenköpfe **14** bilden mit entsprechenden Vertiefungen im Gleitlagerelement eine Kupplung ohne einen Achsversatz, bei dem der Rotor **10** seine rotierende Bewegung formschlüssig überträgt. Die zylindrischen Mitnehmerelemente **13** bilden mit entsprechend größeren Vertiefungen im Gleitlagerelement eine Kupplung mit Ausgleich vom Achsversatz. Dieser Mechanismus einer Kupplung mit Achsversatz ist vorzugsweise spielfrei. Der Rotor **8** überträgt seine rotierende Bewegung ebenfalls über Schraubenköpfe **14** in entsprechende Aussparung formschlüssig in die Hohlwelle **2.** **Fig.1a** **und b** repräsentieren damit eine Ausführungsform mit zwei axialen Motoren, einem Antriebselement mit Innengewinde und zwei Gleitlagerelementen und damit eine konstruktiv einfache Ausführung der Erfindung.

**Fig.2a** **und b** repräsentiert eine Ausführungsform mit zwei Motoren mit Hohlwelle um die Antriebsspindel angeordnet, bei der die Gleitlagerelemente **6** anstelle mit Gleitlagerflächen mit einem zur Antriebsspindel passenden Innengewinde vorgesehen sind. Ein Kupplungsmechanismus mit den vorgenannten Mitnehmerelementen **13** zum Ausgleich des Achsversatzes koppelt dann beide Gleitlagerelemente mit dem dazwischen angeordneten Antriebselement **7** und mit den vorgenannten Schraubenköpfen **14** mit dem zweiten Motor. Die Schraubenköpfe **14** bilden mit entsprechenden Vertiefungen im Gleitlagerelement **6** die Kupplung **5** im Gegensatz zu der in **Fig.1a** **und b** dargestellten Ausführungsform mit einem Achsversatz. Die zylindrischen Mitnehmerelemente **13** im Antriebselement **7** bilden mit entsprechend größeren Vertiefungen im Gleitlagerelement **6** ebenfalls eine (weitere) Kupplung mit Ausgleich von Achsversatz. Eine Kupplung kommt auch wieder zwischen Antriebselement und zweitem Gleitlagerelement zum Einsatz. Dieser Mechanismus einer Kupplung mit Achsversatz ist vorzugsweise spielfrei. Die Hohlwelle 2 weist hierzu vorzugsweise vier über den Umfang der Gleitlagerelemente versetzte Bohrungen für die Lagerungen auf, sodass sich das Antriebselement und die beiden Gleitlagerelemente, die in dieser Ausführung die gleiche Funktion wie das Antriebselement übernehmen, auf gegenüberliegenden Seiten der Antriebsspindel **4** eingreifen. **Fig.2a** **und b** repräsentiert damit eine Ausführungsform mit zwei axialen Motoren und drei Antriebselementen (einschließlich der zwei Gleitlagerelemente) mit Innengewinde. Die zwei Gleitlagerelementen sind hier durch Elemente mit Innengewinde ersetzt, deren Umdrehung gekoppelt ist. Diese Ausführung ist konstruktiv etwas komplizierter, es kann jedoch auf die Gleitlagerelemente verzichtet werden und sowohl Trägheits- als auch Antriebskräfte greifen symmetrisch zur Antriebsspindel an, was bei hohen Geschwindigkeiten Schwingungen verhindern kann. Ein Vorteil liegt in der Verteilung der axialen Kraftübertragung auf zusätzliche Elemente mit Innengewinde, was aber mit einem komplexeren Kupplungsmechanismus erkauft werden muss.

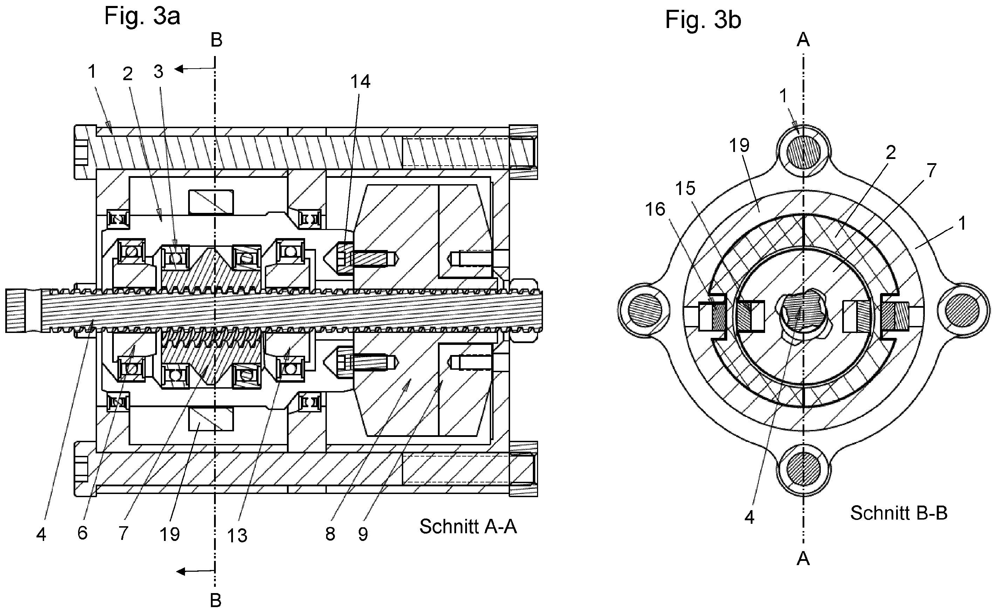

**Fig.3a** **und b** zeigt eine Ausführungsform mit nur einem Motor um die Antriebsspindel als Antriebsquelle sowie einem Kupplungselement zur lastabhängigen Umschaltung zwischen beiden Betriebsmodi. Der Rotor **8** überträgt seine rotierende Bewegung über Schraubenköpfe **14** in entsprechende Aussparung formschlüssig in die Hohlwelle **2.** Anstelle des zweiten Motors sind schaltbare Kupplungen **15** und **16 (****Fig.3b****)** vorgesehen, die die Drehungen der Hohlwelle **2** und des Antriebselement **7** koppeln und allein über den Schaltzustand zwischen den beiden Betriebsmodi, d.h. zwischen unterschiedlichen Untersetzungen wechseln. Die Kupplung ist hier mit Magneten realisiert, die bis zum gewünschten Drehmoment als Mitnehmer zwischen Antriebselement **7** mit Innengewinde und Hohlwelle **2** dienen. Die Magnete sind in einem Ring **19** um die Hohlwelle **2** integriert und sind über eine axiale Bewegung dieses Rings verschiebbar. Dadurch ändert sich der Abstand der Magneten und damit das Drehmoment, bei dem die Kupplung schaltet. **Fig.3a** **und b** repräsentieren in einer schematischen Darstellung damit eine Ausführungsform mit nur einer Antriebsquelle sowie einem Kupplungselement zur lastabhängigen Umschaltung zwischen beiden Betriebsmodi.

Vorzugsweise sind die vorgenannten Kupplungen **15** oder **16** als automatische Schaltkupplungen konzipiert, die bei einem vorgebbaren Drehmoment umschalten. Wenn diese Schaltkupplung z.B. ein richtungsabhängiger Freilauf ist, erhält man beispielsweise einen Mechanismus mit schneller Bewegung in eine Richtung und kräftige Bewegung in die andere Richtung.

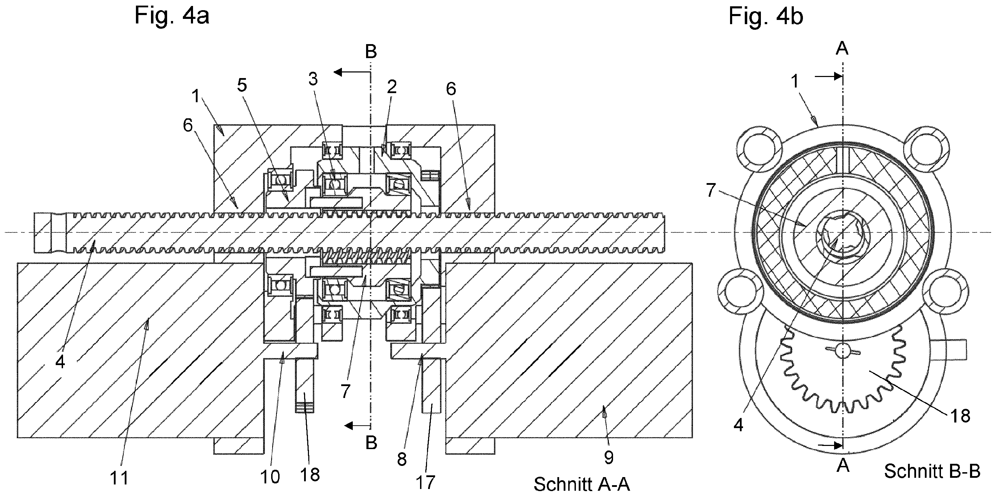

**Fig.4a** **und b** repräsentiert wieder eine Ausführungsform mit zwei Motoren, wobei der erste und/oder zweite Motor aber abseits zur Antriebsspindel **4** und dabei vorzugsweise außerhalb des Gehäuses **1** angeordnet sind. Die Rotoren **8** und **10** übertragen ihre Rotationsbewegung über Zahnradtriebe **17** bzw. **18** (alternativ Riementriebe) auf die Hohlwelle **2** bzw. die Kupplung **5.** Diese Bauform bietet sich insbesondere für Motoren ohne Hohlwelle an. Durch die Trennung von Motor und Gehäuse lässt sich die Antriebsspindel vorzugsweise - wie dargestellt - über Gleitlager direkt im Gehäuse lagern.

In Maschinen mit hohen Anforderungen an die Dynamik und Bauraum (z.B. humanoider Roboter) lassen sich die Motoren der in **Fig.4a** **und b** dargestellten Ausführungsform vorzugsweise vom Linearantriebsmechanismus entkoppelt anordnen, d.h. für die Realisierung eines besonders leichten und kompakten Linearantriebs außerhalb des Linearantriebsmechanismus verlegen, wobei die Leistungsübertragung optional über flexible Wellen anstelle der dargestellten Zahnradgetriebe realisierbar ist.

Die Antriebsspindel **4** muss im Betriebszustand des Getriebes gegen Verdrehen gesichert sein. Dabei verfügt Getriebe über zwei Betriebsmodi mit zwei Untersetzungen und sowohl automatischem als auch gezielten Wechsel der Betriebsmodi:
- Betriebsmodus 1:
   Wenn nur der zweite Motor (in den Längsschnitten A-A in **Fig.1a****,** **2a** **und** **4a****,** jeweils links) angeschaltet ist, verhält sich das Getriebe wie ein normaler Spindeltrieb, d.h. das Antriebselement **7** dreht sich in der feststehenden Hohlwelle **2,** wobei der Innengewindebereich des Antriebselements, der sich im Eingriff befindet, über das Außengewinde der Antriebsspindel **4** gleitet. Die Übersetzung wird dabei nur von der Antriebsspindelsteigung bestimmt.
- Betriebsmodus 2:
   Wenn nur der erste Motor (in den Längsschnitten A-A in **Fig.1a****,** **2a** **und** **4a****,** jeweils rechts) angeschaltet ist, dreht sich die Hohlwelle **2** um die Antriebsspindel, während das Antriebselement **7** und der 2. Motor sich im Verhältnis der Zykloidübersetzung mitdrehen. Die Drehachse des Antriebselements dreht sich mit der Hohlwelle um die Antriebsspindel. Dabei rollt das Antriebselement **7** mit seinem Innengewinde wie in einem Zykloidgetriebe mit einer Zykloidübersetzung über das Außengewinde der Antriebsspindel **4.** Die Übersetzung der Antriebsspindel wird dabei mit der Übersetzung des Zykloidgetriebes multipliziert. Diese Übersetzung ist i = d/(D-d) wobei d der effektive Durchmesser der Gewindestange und D der effektive Durchmesser des Antriebselements ist.

Ein Betriebsmodus lässt sich manuell oder gesteuert durch Ausund Einschalten eines der Motoren einstellen.

Sind beide Motoren angeschaltet, erfolgt ein lastabhängiger Wechsel zwischen den beiden genannten Betriebsmodi und damit Untersetzungen. Wenn die Drehzahl des zweiten Motors durch ein höheres benötigtes Drehmoment bei einer höheren benötigten Stellkraft sinkt, übertrifft die durch die Übersetzung im Zykloidgetriebe reduzierte Drehzahl des ersten Motors ab einem Punkt die Drehzahl des zweiten Motors, womit ein Wechsel vom Betriebsmodus 1 in den Betriebsmodus 2 erfolgt. Das dann mit der Zykloidübersetzung umgesetzte Drehmoment wird auf das Antriebselement **7** übertragen und dort über die Gewindesteigung in eine Stellkraft umgewandelt. Dabei geht der Wirkmechanismus von einem Geiten der Antriebselement auf der Antriebsspindel mit hoher relativer Reibung (aber geringer absoluter Reibung durch niedriger Axialkraft, Betriebsmodus 1) zu einem Rollen des Antriebselements auf der Antriebsspindel mit geringer relativer Reibung (Betriebsmodus 2) über. Wenn beide Motoren eingeschaltet bleiben, ist der Schaltpunkt daher von der externen Kraft auf die Antriebsspindel abhängig - bei hoher Kraft ist die Getriebestufe mit hoher Übersetzung aktiv und bei niedriger Kraft die Getriebestufe mit niedriger Übersetzung.

Eine Ansteuerung beider Motoren bewirkt somit folgendes:
- Im Betriebsmodus 1:
   Bei niedriger Kraft/Moment neigt der Mechanismus mit niedriger Untersetzung den Mechanismus mit hoher Untersetzung durch die Gleitbewegung in der Spindel zu überholen. Der Antrieb der Hohlwelle vermindert nur die Reibung indem er die Relativgeschwindigkeit durch den Rollanteil verringert.
- Im Betriebsmodus 2:
   Beide Antriebe sind parallel geschaltet, wodurch sich die Antriebsmomente addieren, die jeweils generierten Vorschubgeschwindigkeiten aber zwangsläufig gleich sind. Das Antriebselement wandelt dieses addierte Drehmoment in Kraft um. Eine Selbsthemmung verhindert ein Gleitbewegung der Antriebsspindel im Antriebselement.

Die maximale Stellgeschwindigkeit der Antriebsspindel **4** ist immer proportional zur Geschwindigkeit des zweiten Motors (Betriebsmodus 1, geringere Untersetzung). Sollen für verschiedene Schaltzustände verschiedene Regelparameter verwendet werden, kann der Schaltzustand aus dem Verhältnis der Geschwindigkeit des ersten Motors und zweiten Motors ermittelt werden.

Eine Umschaltung zwischen den Betriebsmodi verläuft in vorteilhafter Weise nicht abrupt, sondern fließend, d.h. in einem Übergangsbereich zwischen Wälzen und Gleiten des Innengewindes des Antriebselements auf dem Außengewinde der Antriebsspindel.

In Praxi wird vorgeschlagen, beide Motoren gemeinsam anzusteuern, wobei mittels einer individuellen Spannungs- oder Stromregelung (z.B. mit einem PID-Regler) die gewünschten Geschwindigkeiten je Motor separat oder gemeinsam einstellbar und regelbar sind. Bei einer Umschaltung zwischen den Betriebsmodi verändert sich jedoch die Regelstrecke und damit die Regelparameter. Es wird vorgeschlagen, für die beiden Betriebsmodi auch zwei verschiedene Sätze von Parametern vorzuhalten, die dann z.B. in Abhängigkeit der Drehzahl oder der Belastung der beiden Motoren im Verhältnis zueinander verwendet werden. Wenn die Motoren sich im Verhältnis der Zykloidübersetzung drehen, stellt sich der Betriebsmodus 2 ein. Andererseits stellt sich der Betriebsmodus 1 dann ein, wenn sich der zweite Motor schneller dreht als der erste Motor. Bei gleicher Ansteuerung der Motoren kann anhand des Drehzahlverhältnisses der Betriebszustand detektiert werden.

Bei Schrittmotoren wird man vorzugsweise die Geschwindigkeiten für beide Motoren bis im Verhältnis der Zykloidübersetzung vorgeben. Sobald der schnellere Motor seine Maximalgeschwindigkeit erreicht hat, ist nur noch der langsamere Motor in seiner Geschwindigkeit steigerbar, wobei man sich in Betriebsmodus 1 befindet (und die Kraft begrenzt ist).

Die Auswahl der Antriebsspindelsteigung, Reibung und erforderlichen Motormoment erfolgt unter der Rahmenbedingung, dass die auf die Stellkraft der Antriebsspindel entgegenwirkende Gegenkraft nicht so groß ist, dass die Getriebeselbsthemmung zwischen Antriebsspindel und Motoren, insbesondere zu dem mit niedrigerer Untersetzung angebundenen zweiten Motor überwunden wird.

Die vorgenannte Kombination eines Zykloidgetriebes mit einer Antriebsspindel und zwei Motoren erlaubt folglich einen Wechsel zwischen zwei Getriebestufen mit sowohl automatischer als auch gesteuerter Umschaltmöglichkeit. Die Untersetzung im zweiten Betriebszustand ist höher als die im ersten Betriebszustand.

Der Linearantrieb zeichnet sich in vorteilhafter Weise durch einen einfachen Aufbau mit einem hohen Anteil von Standardkomponenten (Lagerungen, Antriebsspindel, Motoren etc.) aus. Die verbleibenden Komponenten wie das Antriebselement, die Hohlwelle oder Gleitlager können aus reibungsoptimiertem Kunststoff mit einfachen Mitteln, wie z.B. im 3D Druck Verfahren hergestellt werden, da die Anforderungen an die Genauigkeit relativ gering sind. Aufgrund der ausgedehnten Flächen, die für eine Kraftübertragung zur Verfügung stehen, sind dennoch hohe Kräfte vergleichbar mit Spindeltrieben mit Muttern aus tribologischen Kunststoffen möglich. Dies kommt einer Herstellung individueller und günstiger und leichter mehrgängiger Lineargetriebe sehr entgegen.

Bei allen dargestellten Ausführungsformen sind die individuell zu fertigenden Teile, insbesondere das Gehäuse, die Hohlwelle, Gleitlagerelemente und/oder das Antriebselement, im 3D-Drucker herstellbar sind und überwiegend (außer z.B. das Gehäuse in **Fig.4a****, b)** auch ohne Stützmaterial im FDM 3D-Druck herstellbar. Dadurch eignet sich diese Ausführungsform besonders für eine günstige und anpassbare Fertigung in verschiedenen Baugrößen und Übersetzungen.

### Bezugszeichenliste:

- 1: Gehäuse
- 2: Hohlwelle
- 3: exzentrischen Lager
- 4: Antriebsspindel
- 5: Kupplung
- 6: Gleitlager / Gleitlagerelement
- 7: Antriebselement
- 8: Rotor des ersten Motors als erste Antriebsquelle
- 9: Stator des ersten Motors als erste Antriebsquelle
- 10: Rotor des zweiten Motors als zweite Antriebsquelle
- 11: Stator des zweiten Motors als zweite Antriebsquelle
- 12: Abschlussplatte des Gehäuses
- 13: Mitnehmerelement
- 14: Schraubenkopf
- 15: Kupplung zwischen Hohlwelle und Antriebselement
- 16: Kupplung zwischen Hohlwelle und Gleitlagerelement
- 17: Zahnradtrieb zwischen Rotor und Hohlwelle
- 18: Zahnradtrieb zwischen Rotor und Gleitlagerelement
- 19: Ring mit Magneten

## Patentansprüche

1. Linearantrieb mit zwei Untersetzungsstufen, umfassend:
a) eine Antriebsspindel **(4)** für eine axiale Stellbewegung mit einem Außengewinde,
b) ein Gehäuse **(1),** konzentrisch um die Antriebspindel angeordnet,
c) eine im Gehäuse um die Antriebsspindel konzentrisch rotatorisch gelagerte und durch eine erste Antriebsquelle **(8, 9)** antreibbare Hohlwelle **(2),**
d) ein in der Hohlwelle mit einem exzentrischen Versatz zur Antriebsspindel rotatorisch gelagertes und durch eine zweite Antriebsquelle **(10, 11)** antreibbares Antriebselement **(7)** mit einem in das Außengewinde eingreifende Innengewinde sowie
e) Gleitlagerelemente **(6)** zur axialen Führung der Antriebsspindel im Gehäuse, wobei eine Verdrehsicherung für die Antriebsspindel gegenüber dem Gehäuse vorgesehen ist,
wobei
f) die Gewinde von Antriebsspindel und Antriebselement ein gleiches Gewindemodul aufweisen,
g) der Gewindeinnendurchmesser des Antriebselements größer als der Gewindeaußendurchmesser der Antriebsspindel ist,
h) der exzentrische Versatz so eingestellt ist, dass das Innengewinde des Antriebselements nur einseitig in das Außengewinde der Antriebsspindel eingreift sowie
i) die zweite Antriebsquelle einen Überlastschutz mit einer Schalt- oder Rutschkupplung zur Leistungsbegrenzung oder Abschaltung aufweist, wobei eine erste Untersetzungsstufe ohne und eine zweite Untersetzungsstufe mit der Leistungsbegrenzung oder der Abschaltung anliegt.

2. Linearantrieb nach Anspruch 1, **dadurch gekennzeichnet, dass** die erste und die zweite Antriebsquelle **(8, 9, 10, 11)** jeweils einen ersten bzw. zweiten Motor umfassend.

3. Linearantrieb nach Anspruch 2, **dadurch gekennzeichnet, dass** der ersten bzw. zweiten Motor einen Elektromotor, Getriebemotor oder Schrittmotor umfasst.

4. Linearantrieb nach Anspruch 2 oder 3, **dadurch gekennzeichnet, dass** der erste und zweite Motor jeweils konzentrisch zur Antriebsspindel **(4)** angeordnet sind.

5. Linearantrieb nach Anspruch 4, **dadurch gekennzeichnet, dass** jeder Motor jeweils einen im Gehäuse **(1)** fest eingebauten Stator **(9, 11)** und um die Antriebsspindel **(4)** angeordneten Rotor **(8, 10)** aufweisen.

6. Linearantrieb nach Anspruch 5, **dadurch gekennzeichnet, dass** Gleitlagerelemente zur axialen Führung der Antriebsspindel **(4)** in jeweils einer Bohrung konzentrisch in den Rotoren **(8, 10)** angeordnet oder durch die Innenwandungen der Bohrungen gebildet sind.

7. Linearantrieb nach Anspruch 2 oder 3, **dadurch gekennzeichnet, dass** der erste und/oder zweite Motor abseits zur Antriebsspindel **(4)** angeordnet sind.

8. Linearantrieb nach Anspruch 7, **dadurch gekennzeichnet, dass** der erste und/oder zweite Motor außerhalb des Gehäuse **(1)** angeordnet sind.

9. Linearantrieb nach Anspruch 7 oder 8, **dadurch gekennzeichnet, dass** die beiden Motoren über Zahnrad- oder Riementriebe **(17, 18)** und/oder mittels flexibler Wellen an die Hohlwelle **(2)** bzw. das Antriebselement **(7)** gekoppelt sind.

10. Linearantrieb nach einem der Ansprüche 2 bis 9, **dadurch gekennzeichnet, dass** die Rotoren **(8, 10)** des ersten und zweiten Motors jeweils mit Übertragungsmitteln **(5, 13, 14)** an die Hohlwelle **(2)** bzw. dem Antriebselement **(7)** um die Antriebsspindel **(4)** drehbar gekoppelt sind.

11. Linearantrieb nach Anspruch 1, **dadurch gekennzeichnet, dass** die erste und die zweite Antriebsquelle ein erstes bzw. ein zweites Antriebsmittel umfasst, wobei beide Antriebsmittel durch einen gemeinsamen motorischen Antrieb mit nur einem Motor und Übertragungsmitteln antreibbar sind, wobei der Überlastschutz der zweiten Antriebsquelle eine Schaltkupplung umfasst.

12. Linearantrieb nach Anspruch 11, **dadurch gekennzeichnet, dass** die Schaltkupplung einen Freilauf oder eine aktiv schaltbare Kupplung, umfasst

13. Linearantrieb nach einem der vorgenannten Ansprüche, **dadurch gekennzeichnet, dass** die Antriebsspindel **(4)** eine Verdrehsicherung gegenüber dem Gehäuse **(1)** aufweist und nur axial im Gehäuse bewegbar gelagert ist.

14. Linearantrieb nach einem der vorgenannten Ansprüche, **dadurch gekennzeichnet, dass** das Antriebselement eine Mutter oder mehrere in Reihe fest miteinander gekoppelte Muttern oder andere Elemente mit Innengewinde mit exzentrischer Gewindebohrung umfasst.

15. Linearantrieb nach einem der vorgenannten Ansprüche, **dadurch gekennzeichnet, dass** die Gleitlagerelemente **(6)** zur axialen Führung der Antriebsspindel **(4)** zwei in der Hohlwelle **(2)** konzentrisch drehbar gelagerte Gleitlagerschalen umfassen.

## Claims

1. Linear drive having two reduction stages, comprising:
a) a drive spindle (4) for an axial positioning movement having an external screw thread,
b) a housing (1) which is concentric around the drive spindle,
c) a hollow shaft (2) which is rotatably mounted in the housing such that the hollow shaft is concentric around the drive spindle and which can be driven by means of a first drive source (8,9),
d) a drive element (7) which is rotatably mounted in the hollow shaft such that the drive element has an eccentric offset to the drive spindle and which can be driven by means of a second drive source (10, 11), the drive element having an internal screw thread engaging in the external screw thread, and
e) plain bearing elements (6) for axially guiding the drive spindle in the housing, the drive spindle being secured against rotation relative to the housing,
wherein
f) the screw threads of the drive spindle and of the drive element have the same gear module,
g) the screw-thread inside diameter of the drive element is greater than the screw-thread outside diameter of the drive spindle,
h) the eccentric offset is set such that the internal screw thread of the drive element engages in the external screw thread of the drive spindle only on one side, and
i) the second drive source has overload protection with a switching or slipping clutch for power limitation or switch-off, a first reduction stage being applied without and a second reduction stage with power limitation or switch-off.

2. Linear drive according to claim 1, **characterised in that** the first and second drive sources (8, 9, 10, 11) each comprise a first and second motor respectively.

3. Linear drive according to claim 2, **characterised in that** the first or second motor comprises an electric motor, geared motor or stepper motor.

4. Linear drive according to claim 2 or 3, **characterised in that** the first and second motors are each arranged concentrically around the drive spindle (4).

5. Linear drive according to claim 4, **characterised in that** each motor has a stator (9, 11) fixedly mounted in the housing (1) and a rotor (8, 10) arranged around the drive spindle (4).

6. Linear drive according to claim 5, **characterised in that** plain bearing elements for axially guiding the drive spindle (4) are arranged concentrically in the rotors (8, 10) in a respective bore or are formed by the inner walls of the bores.

7. Linear drive according to claim 2 or 3, **characterised in that** the first and/or second motors are arranged away from the drive spindle (4).

8. Linear drive according to claim 7, **characterised in that** the first and/or second motors are arranged outside the housing (1).

9. Linear drive according to claim 7 or 8, **characterised in that** the two motors are coupled to the hollow shaft (2) or the drive element (7) via gear or belt drives (17, 18) and/or by means of flexible shafts.

10. Linear drive according to any of claims 2 to 9, **characterised in that** the rotors (8, 10) of the first and second motors are each coupled to the hollow shaft (2) or to the drive element (7) by transmission means (5, 13, 14) so as to be rotatable about the drive spindle (4).

11. Linear drive according to claim 1, **characterised in that** the first and the second drive sources comprise a first and a second drive means respectively, both drive means being driveable by a common motor drive with only one motor and transmission means, the overload protection of the second drive source comprising a clutch.

12. Linear drive according to claim 11, **characterised in that** the clutch has a freewheel or an actively engageable clutch.

13. Linear drive according to any of the preceding claims, **characterised in that** the drive spindle (4) is secured against rotation relative to the housing (1) and can only be moved axially within the housing.

14. Linear drive according to any of the preceding claims, **characterised in that** the drive element comprises a nut or a plurality of nuts firmly coupled to one another in series, or other elements having an internal thread with an eccentric threaded bore.

15. Linear drive according to any of the preceding claims, **characterised in that** the plain bearing elements (6) for axially guiding the drive spindle (4) comprise two plain bearing shells concentrically rotatably mounted in the hollow shaft (2).

## Revendications

1. Entrainement linéaire ayant deux étages de réduction, comprenant :
a) une broche **(4)** d'entraînement pour un mouvement axial de réglage ayant un filet extérieur,
b) un carter **(1)** disposé concentriquement autour de la broche d'entraînement,
c) un arbre **(2)** creux monté en rotation concentriquement autour de la broche d'entraînement dans le carter et pouvant être entraîné par une première source **(8, 9)** d'entraînement,
d) un élément **(7)** d'entraînement, qui est monté à rotation dans l'arbre creux avec un décalage excentré par rapport à la broche d'entraînement, qui peut être entraîné par une deuxième source **(10, 11)** d'entraînement et qui a un filet intérieur engrenant avec le filet extérieur, ainsi que
e) des éléments **(6)** de palier lisse pour le guidage axial de la broche d'entraînement dans le carter, dans lequel il est prévu une sécurité à la torsion pour la broche d'entraînement par rapport au carter,
f) les filets de la broche d'entraînement et de l'élément d'entraînement ont un même module de filet,
g) le diamètre intérieur de filet de l'élément d'entraînement est plus grand que le diamètre extérieur de filet de la broche d'entraînement,
h) le décalage excentré est réglé de manière à ce que le filet intérieur de l'élément d'entraînement n'engrène que d'un côté dans le filet extérieur de la broche d'entraînement, ainsi que
i) la deuxième source d'entrainement a une protection à la surcharge par un embrayage ou un accouplement à glissement pour la limitation de puissance ou l'arrêt, dans lequel un premier étage de réduction s'applique sans et un deuxième étage de réduction avec la limitation de puissance ou l'arrêt.

2. Entraînement linéaire de la revendication 1, **caractérisé en ce que** la première et la deuxième source **(8, 9, 10, 11)** d'entraînement comprennent respectivement un premier et respectivement un deuxième moteurs.

3. Entraînement linéaire de la revendication 2, **caractérisé en ce que** le premier et respectivement le deuxième moteurs comprend un moteur électrique, un motoréducteur ou un moteur pas à pas.

4. Entraînement linéaire de la revendication 2 ou 3, **caractérisé en ce que** le premier et le deuxième moteurs sont montés respectivement concentriquement à la broche **(4)** d'entraînement.

5. Entraînement linéaire de la revendication 4, caractérisé chaque moteur à respectivement un stator **(9, 11)** monté fixe dans le carter **(1)** et un rotor **(8, 10)** monté autour de la broche **(4)** d'entraînement.

6. Entraînement linéaire de la revendication 5, **caractérisé en ce que** deux éléments de palier lisse pour le guidage axial de la broche **(4)** d'entraînement sont montés dans respectivement un alésage concentriquement dans les rotors **(8, 10)** ou sont formés par les parois intérieures des alésages.

7. Entraînement linéaire de la revendication 2 ou 3, **caractérisé en ce que** le premier et/ou le deuxième moteurs sont montés à l'écart de la broche **(4)** d'entraînement.

8. Entraînement linéaire de la revendication 7, **caractérisé en ce que** le premier et/ou le deuxième moteurs sont montés à l'extérieur du carter **(1).**

9. Entraînement linéaire de la revendication 7 ou 8, **caractérisé en ce que** les deux moteurs sont accouplés à l'arbre **(2)** creux et respectivement à l'élément **(7)** d'entraînement par des entraînements **(17, 18)** à roue dentée ou à courroie et/ou au moyen d'arbres flexibles.

10. Entraînement linéaire de la revendication 2 à 9, **caractérisé en ce que** les rotors **(8, 10)** du premier et du deuxième moteurs sont accouplés avec possibilité de tourner autour de la broche **(4)** de rotation respectivement par des moyens **(5, 13, 14)** de transmission à l'arbre **(2)** creux et respectivement à l'élément **(7)** d'entraînement.

11. Entraînement linéaire de la revendication 1, **caractérisé en ce que** la première et respectivement la deuxième source d'entraînement comprend un premier et respectivement un deuxième moyen d'entraînement, dans lequel les deux moyens d'entraînement peuvent être entraînés par un moyen d'entraînement à moteur commun ayant seulement un moteur et des moyens de transmission, dans lequel la protection et la surcharge de la deuxième source d'entraînement comprend un embrayage.

12. Entraînement linéaire de la revendication 11, **caractérisé en ce que** l'embrayage comprend une roue libre ou un accouplement pouvant être embrayé de manière active.

13. Entraînement linéaire suivant l'une des revendications précédentes, **caractérisé en ce que** la broche **(4)** d'entraînement a une sécurité à la torsion par rapport au carter **(1),** qui est monté mobile seulement axialement dans le carter.

14. Entraînement linéaire suivant l'une des revendications précédentes, **caractérisé en ce que** l'élément d'entraînement comprend un écrou ou plusieurs écrous montés entre eux en série de manière fixe ou d'autres éléments ayant des filets intérieurs à trou taraudé excentré.

15. Entraînement linéaire suivant l'une des revendications précédentes, **caractérisé en ce que** les éléments **(6)** de palier lisse comprennent, pour le guidage axial de la broche **(4)** d'entraînement, deux coquilles de palier lisse montés tournantes concentriquement dans l'arbre **(2)** creux.
